# EUROPEAN PATENT APPLICATION

(11) **EP 0 805 600 A2**
(43) Date of publication of application: **05.11.1997**
(21) Application number: 97302751.9
(22) Date of filing: 22.04.1997
(51) Int. Cl.: H04N 7/52

(54) **Compressed video text overlay**

(30) Priority: 02.05.1996 US 641858
(71) Applicant: LUCENT TECHNOLOGIES INC., Murray Hill, New Jersey 07974-0636 (US)
(72) Inventor: Mitchell, John, Charles, Middletown, New Jersey 07748 (US); Yan, Li, Holmdel, New Jersey 07733 (US)
(74) Representative: Buckley, Christopher Simon Thirsk

(57) **Abstract**

Novel techniques for overlaying a message onto a video image in the compressed domain. The video image is represented as a compressed, digitized video bit stream. The message is digitized and compressed to form a coded message. The coded message is combined with the compressed, digitized video bit stream to generate an output video bit stream representing the video image with a message overlay. The message may consist of text, alphanumeric characters, numbers, status indicators, symbols, and/or icons.

## Description

### Background of the Invention

### 1. Field of the Invention

The invention relates generally to video communications systems, and more specifically to techniques for overlaying messages onto video images.

### 2. Background Art

In visual communications systems, it is possible to overlay a textual message onto an existing video image. For example, during typical network television newscasts, message overlays are often used to indicate the call letters, channel assignment, and network affiliation of a given television station, as well as the identity and location of a given newscaster. More broadly, message overlay may be performed whenever there is a need to deliver a video message without substantially interrupting an ongoing video transmission.

One existing approach to message overlay operates in the analog domain. A textual or graphical message, as selected by a system user, is represented using analog signals. These analog signals are then transmitted via in-band signaling or out-of-band signaling, wherein the signaling band is defined with reference to the frequency bandwidth of a video source signal. The overlay operation may be performed at a central control location or, alternatively, at a local terminal. For example, in the case of television broadcasting, text overlay is performed at the television studio and/or transmitting facility while, in the context of multimedia communications, text overlay is usually performed at a local terminal such as a multimedia endpoint device.

Messages transmitted via in-band signaling are directly added to (i.e., superimposed onto) the video source signal and, therefore, the overlay operation is terminal-independent. Therefore, the devices that are used to receive the messages need not be equipped with any special hardware or software. By way of example, television stations use in-band signaling so that virtually any consumer-grade television receiver will display the overlaid message, and the viewer is not required to purchase enhanced equipment in order to view the message. By contrast, messages transmitted via out-of-band signaling require cooperation among a plurality of message receivers. This cooperation signifies that the receiver needs to have functionality (i.e., hardware and software) sufficient to decode the out-of-band signal in order to superimpose the textual or graphical message with the video source signal.

Other existing communications systems have used digital approaches to message overlay. An input message is converted into a digital format and then transmitted using in-band signaling or, alternatively, out-of-band signaling. For example, in the case of a multipoint, multimedia video conferencing system, analog video and audio source signals are sampled and converted into digital form at the endpoints, and the resulting digitized signals are then data-compressed for transmission. The digitized, compressed audio and video signals are then sent to a multipoint control unit (MCU). The MCU receives a digitized, compressed audio and video signal, in the form of a compressed bitstream, from each of a plurality of endpoint devices, and the MCU provides proper routing for these bitstreams. To send messages and to display these messages at one or more endpoint devices, the MCU sends corresponding control signal sequences, together with the actual digitized message, to each endpoint via a data channel. Upon receiving the message from the data channel, the endpoint device displays the message on the local video display device. In this example, the text overlay is endpoint-dependent.

Another existing technique for message overlay is termed the digital pel domain approach. Messages are first converted into NTSC (North American Television Standard for Color) format and then directly added to the analog video signal to form a composite video signal. The composite video signal is then digitized, compressed, and transmitted. As the messages are embedded into the actual video signal, this technique is endpoint-independent.

Although the foregoing message overlay techniques may be adequate for some applications in broadcast television and/or multimedia conferencing, these techniques are not sufficient for present-day communications systems which utilize digital signal processing techniques and/or digital signal transmission protocols. Even for communications systems that are essentially analog in nature, such as broadcast television, digital processing systems are typically employed at some point in the signal path before the signals are converted back into analog form for transmission.

Digital signal transmission protocols and digital signal processing techniques generally operate in a compressed-signal domain, wherein an analog input signal is sampled, converted into digital form, and this digital signal is then data-compressed prior to undergoing further processing steps. Using conventional analog message overlay techniques in conjunction with compressed digital signals results in inadequate system performance. Processing delays are excessive, and hardware requirements are unduly burdensome. For example, when a compressed video source signal is inputted to a message-generating device, the message generating device must first completely decompress the video source signal into the pel domain, add the desired message to the video source signal in the pel domain, and then compress this pel-domain signal back into the compressed domain.

### Summary of the Invention

Novel techniques are disclosed for overlaying a message onto a video image in the compressed domain. The video image is represented as a compressed, digitized video bit stream. The message is digitized and compressed to form a coded message. The coded message is combined with the compressed, digitized video bit stream to generate an output video bit stream representing the video image with a message overlay. The message may consist of text, alphanumeric characters, numbers, status indicators, symbols, and/or icons.

### Brief Description of the Drawings

FIG. 1 is a hardware block diagram of a video message overlay system constructed according to a preferred embodiment disclosed herein;
FIGs. 2 and 3 are data structure diagrams setting forth illustrative coding formats for representing video information;
FIG. 4 is a data structure diagram setting forth the manner in which a pixel-by-pixel block of an image is used to represent a message; and
FIG. 5 is a hardware block diagram setting forth the system architecture of a multimedia conferencing system which includes a multipoint control unit (MCU) having a video processor equipped to perform video message overlay according to various preferred embodiments disclosed herein.

### Detailed Description of the Invention

Pursuant to various embodiments disclosed herein, novel message overlay techniques are described that greatly reduce processing delay and implementation costs. These techniques are device-independent, in that message overlays can be placed into a compressed video bit stream from virtually any video source. The techniques can be advantageously employed, for example, in the operational environment of multipoint video communications to provide advanced features such as speaker identification, terminal name, location name, event notification, conference status indication, time of day, video signal parameters, etc. The enhanced message overlay techniques disclosed herein may also be utilized in conjunction with video-on-demand, video telephony, cable television, satellite television, and/or broadcast television.

If existing techniques are used to overlay messages onto a compressed video signal, the video signal must be decompressed before the message is overlaid, and then recompressed after message overlay. However, since the overlay operations of the embodiments disclosed herein are performed in the compressed domain, the steps of decompression and recompression are eliminated. Such decompression and recompression would add unnecessary processing delay, as well as increase the overall costs of implementation.

Although the message overlay techniques disclosed herein are described in the operational environment of a standard generally known as the H.261 standard, this is done for illustrative purposes only, it being understood that these techniques are applicable to virtually any video compression technique that uses a layered syntax. Examples of layered-syntax video compression techniques are the MPEG-1 and MPEG-2 video compression standards. The H.261 standard is described in ITU-T document "Recommendation H.261, Video Codec for Audiovisual Services at px64 kbits/s", May 1992 and "Description of Reference Model 8", June 9, 1989.

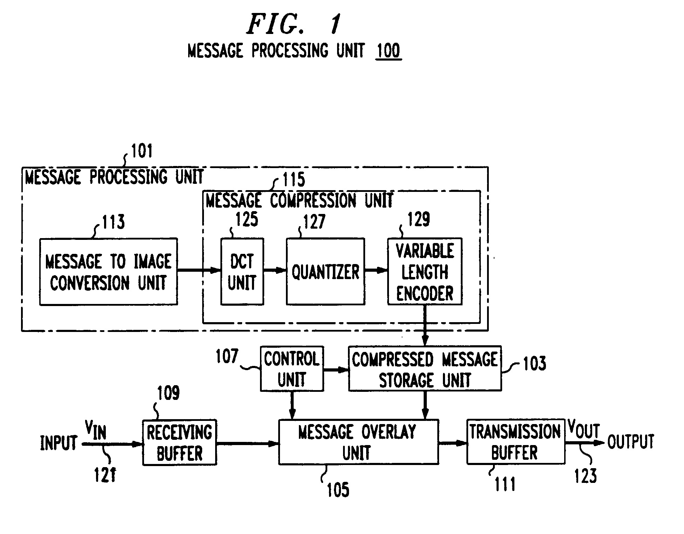

Refer now to FIG. 1, which sets forth a hardware block diagram of a message overlay system constructed in accordance with an embodiment disclosed herein. Message overlay system 100 consists of a message processing unit 101, a compressed message storage unit 103, an overlay unit 105, a control unit 107, a receiving buffer 109, and a transmitting buffer 111. The message processing unit 101 includes a message to image conversion unit 113 and a message compression unit 115. The input 121 and the output 123 of the message overlay system 100, V_in and V_out, respectively, are video bit streams that are coded in compliance with the above-cited H.261 standard. Input 121 receives a compressed video signal without message overlay, and output 123 generates a compressed video signal having a message overlay.

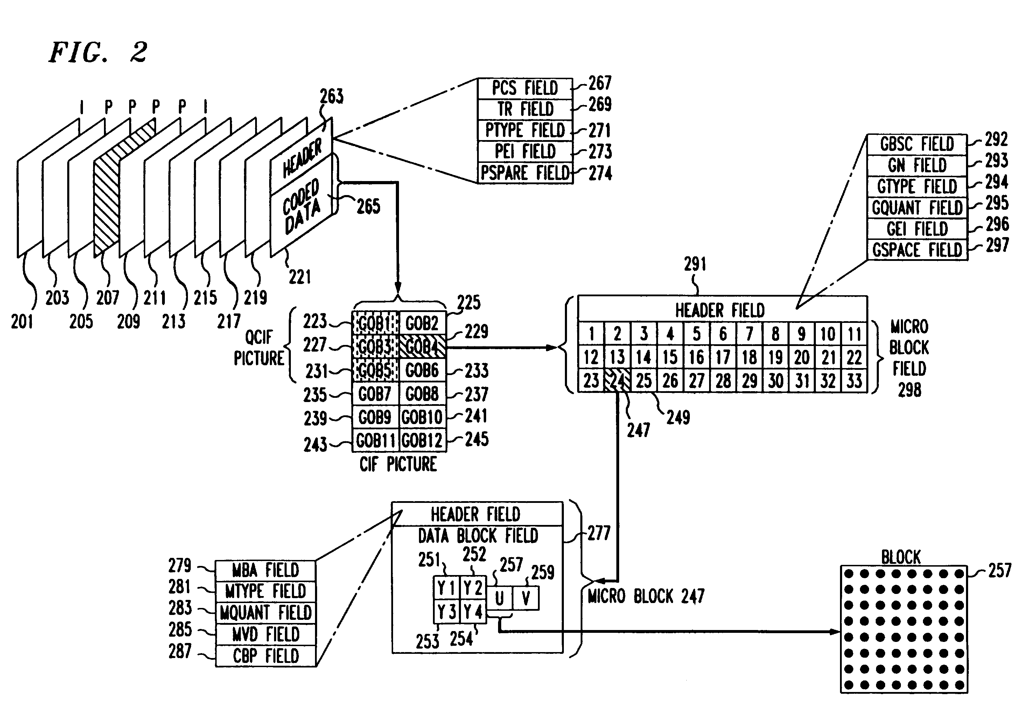

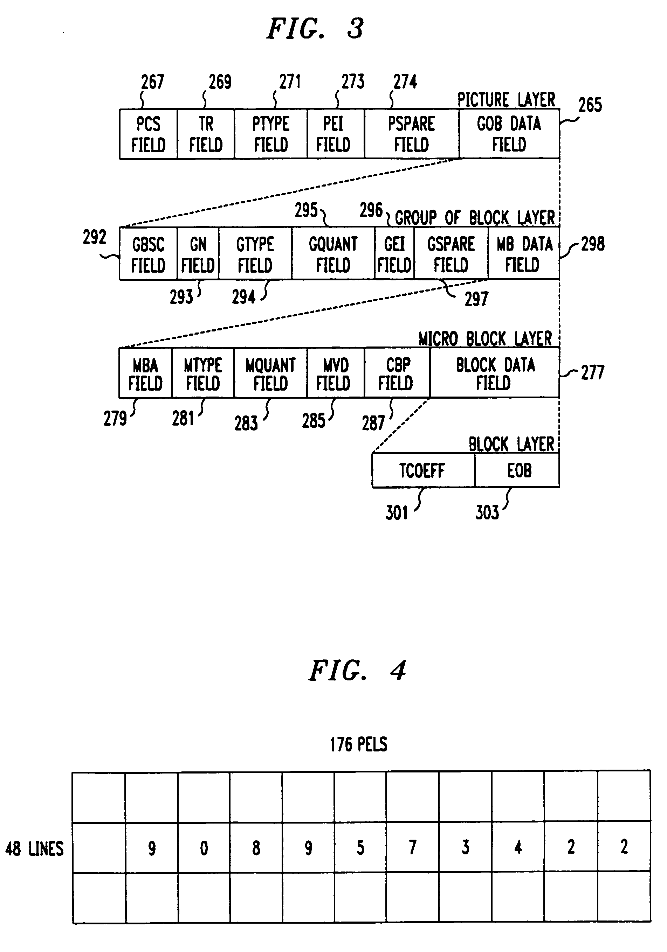

In H.261 video coding, a video input signal, V_in, represents a sequence of video frames. Individual frames are compressed according to one of two types of compression algorithms, intra-frame coding (I) and predictive coding (P). A given video input signal, V_in, may include both I-coded, as well as P-coded, frames. Whether a given frame is I-coded or P-coded may be determined with reference to the specific coding sequence employed, as will be described in greater detail with reference to FIGs. 2 and 3. FIGs. 2 and 3 are data structure diagrams setting forth illustrative coding formats for representing video information.

Compression in the I mode includes designating one or more video frames as I frames, dividing each of the I frames into blocks of, for example, 8x8 pixels, and performing a discrete cosine transform (DCT) on the pixels in the respective blocks. Thereafter, quantization is performed on the coefficients generated by the DCT. These quantized coefficients constitute the compressed image information for the I-encoded frame.

### Compression in the P mode includes the steps of:

1) designating one or more video frames as P frames, and then dividing a respective P-designated frame of, for example, 8x8 pixels, into four contiguous microblocks, each microblock having 4x4 pixels;
2) searching the immediately preceding P or I frame for a microblock containing similar image information;
3) generating motion vectors to translate the microblock found in the immediately preceding I or P frame to the location of the similar microblock in the P frame being compressed;
4) generating a predicted frame from the immediately preceding frame using the motion vectors;
5) subtracting the predicted frame from the P frame being compressed, on a block-by-block basis, to generate blocks of residues;
6) performing DCT's on the blocks of residues;
7) quantizing the coefficients of the blocks of DCT-transformed residues; and
8) concatenating the quantized residue coefficients and the motion vectors to form a compressed video signal.

Referring now to FIG. 2, video information is represented as a plurality of frames 201, 203, 205, 207, 209, 211, 213, 215, 217, 219, 221. Each of these frames contains a representation of a two-dimensional image in the form of a pixel array. Since a given frame may represent a video image at a specific moment in time, a plurality of frames may be employed to represent a moving image. Each frame represents a picture. In an intra-frame-coded picture, i.e., an I picture, every microblock is intra-coded. That is, each microblock is coded without reference to any microblock in the previous I or P frame. In a predictive-coded picture, the microblocks can be either intra-coded or inter-coded. A plurality of frames represents a coded video sequence.

Each of the frames is compressed according to any one of the two types of compression algorithms discussed above, termed I-mode compression and P-mode compression. I-mode compression is sometimes referred to as intra-frame coding (I), and P-frame compression is sometimes referred to as predictive coding (P). In the example of FIG. 2, frames 201 and 211 are compressed using intra-frame coding, and frames 203, 205, 207, 209, 213, 215, 217, 219, and 221 are compressed using predictive coding. If intra-frame coding (I) is to be applied to a given frame, such as frame 201, the frame is termed an I-designated frame, and if predictive coding (P) is to be applied to a given frame, such as frame 211, then the frame is termed a P-designated frame. The sequence of frames shown in FIG. 2 establish a data structure for representing a video image in the form of an encoded video sequence having a plurality of levels arranged in a two-dimensional array, wherein each level represents the value of a pixel element. This encoded video sequence may be termed a coded video bit stream.

To form the coded video bit stream for transmission, compressed image information, as well as other information, such as motion vectors, are coded using specified code words. The code words are then multiplexed into a layered structure to form an output coded video bit stream. In an H.261-like environment, the output coded video bit stream is constructed in an hierarchical format, the data structure of which is shown, in simplified form, in FIG. 3.

Considering FIG. 2 in conjunction with FIG. 3, it is apparent that the output coded video bit stream consists of a serially-coded picture. The sequence of frames 201, 203, 205, 207, 209, 211, 213, 215, 217, 219 and 221 forms a coded video bit stream. This bit stream may be conceptualized as a serial representation of coded frames which can be processed to form a moving video image (i.e., a moving picture). A typical sequence of coded frames is IPPP.. PIPPP wherein the letters I and P designate I-coded and P-coded frames, respectively.

For each frame 221, the coded representation of the frame includes a header 263 as well as coded data 265. The header 263 may include a start code and data related to the respective layer. In an H.261 system environment, much of the header information is required for synchronization purposes. For example, at the frame (picture) layer for frame 221, the picture header 263 includes a picture start code (PCS) field 267, a picture number (TR) field 269, a picture type field (PTYPE) 271, a PEI field 273, and a PSPARE field 274. The PEI field 273 and the PSPARE field 274 are used to store extra inserted information which can be adapted, for example, to accommodate future applications.

Picture data is segmented into Groups of Blocks (GOB) 223, 225, 227, 229, 231, 233, 235, 237, 239, 241, 243, and 245. A GOB (for example, GOB 229) comprises one twelfth of the coded frame (CIF) 221 picture area. Therefore, GOB 229 may be conceptualized as including one-third of one-quarter (QCIF) of a coded picture area. The area represented by one-quarter of a coded picture is abbreviated as QCIF. Therefore, there are 12 GOBs 223, 225, 227, 229, 231, 233, 235, 237, 239, 241, 243, 245 in a CIF frame 221, and three GOBs in a QCIF picture. The arrangements of GOBs in a CIF picture, and in a QCIF picture, are depicted in FIG. 2.

Each GOB 229 includes header field 291, followed by a microblock data field 298. The header field 291 includes a GOB start code (GBSC) field 292, a group number (GN) field 293, a group type (GTYPE) field 294, a GOB quantizer (GQUANT) field 295, and spare information fields in the form of a GEI field 296 and a GSPARE field 297. Each GOB 229 consists of 33 microblocks, such as "microblock 24" (reference numeral 247) and "microblock 25" (reference numeral 249). The arrangement of microblocks within a GOB 229 is depicted in FIG. 2 as well as in FIG. 3.

Each microblock 247 includes a header field 275 followed by a block data field 277. The header field 275 includes a microblock address (MBA) field 279, a block type information (MTYPE) field 281, a Quantizer type (MQUANT) field 283, a motion vector (MVD) field 285, and a coded block pattern (CBP) field 287. The block data field 277 of each microblock 247 consists of 6 blocks, including four luminance blocks Y1 (reference numeral 251), Y2 (reference numeral 252), Y3 (reference numeral 253), Y4 (reference numeral 254), one chrominance block U (reference numeral 257) and one chrominance block V (reference numeral 259). An illustrative example of the contents of luminance block U (reference numeral 257) is set forth in FIG. 2. Note that this block includes an 8x8 pixel array wherein all pixels have a luminance value of black.

A block represents a matrix of pixels, e.g., 8x8 over which a discrete cosine transform (DCT) is performed. The array of pixels is represented by a matrix of pixel array coefficients, including a DC coefficient and a plurality of AC coefficients. The transformed coefficients (TCOEFF) 301 (FIG. 3) consists of a DCT DC coefficient (DC) occurring first, followed by respective pixel array DCT AC coefficients (AC) in the order of their relative importance. The arrangement of DC and AC coefficients in an illustrative block data field 277 (FIG. 3) is shown in FIG. 4. The block data field 277 (FIG. 3) consists of the transformed coefficients (TCOEFF) 301 and an end of block code (EOB) 303 which are appended at the end of each successively occurring block of data.

Referring back to FIG. 1, in order to overlay a message onto an image in the compressed domain, the message (i.e., text, graphical information, icon, and/or image) needs to be converted into a desired and/or specified image format by the message-to-image conversion unit 113. Message-to-image conversion unit 113 includes one or more user interface devices, and/or one or more data storage devices. Messages (text, alphanumeric characters, status indicators, icons, images, and/or graphical information) may be stored in an electronic data storage device, and selected via a user interface, such as a keyboard or a computer mouse, that accesses the data storage device. Alternatively, the message may be generated in real time by any of the aforementioned user interface devices, and optionally stored in the electronic data storage device. Other examples of user interface devices include keyboards, video cameras, personal computers, or the like.

The electronic representation of a message, as retrieved from the data storage device and/or as generated by the user interface device, may or may not be in a form that represents a video image. If this representation does not represent an image, it must be converted into a representation of an image. However, even if the stored electronic representation of the message does represent a video image, it may represent an image that does not have the desired/specified format. For example, the electronic representation of the message may represent a full-sized image that, if overlaid onto a compressed video signal, would cover an entire frame of that video signal. Or, by contrast, the electronic representation of the video signal may represent an image that is quite small relative to a frame of a video signal, such that, if this message were overlaid onto the video signal, the message would not be legible. Therefore, the message must be converted into a representation of an image, and this image must be of the proper size relative to a frame of the compressed video signal on which the message is to be overlaid.

The message-to-image conversion unit 113 converts the message into the desired or specified format. In practice, this desired or specified format could be, for example, a smaller-sized version of a CIF frame of the video signal on which the message is to be overlaid, or a QCIF frame (CIF and QCIF have been previously defined). Therefore, the message-to-image conversion unit 113 is adapted to convert electronic signals representing messages (video messages, graphical information, text, etc.) into a digital image representation having the desired/specified format of, for example, a subset of a CIF picture, or a subset of a QCIF picture.

The formatted version of the retrieved information is compressed into a bit stream complying with the H.261 standard by message compression unit 115. Note that message compression unit may be equipped to compress icons, images, symbols, and/or graphical information in addition to textual information. The compressed bit stream generated by message compression unit 115 is stored in the compressed message storage unit 103 in the form of a coded message.

The coded message is retrieved from compressed message storage unit 103 and sent to overlay unit 105 when it is desired to overlay a message onto a video image stored in receiving buffer 109. Note that receiving buffer 109 receives a video image from input 121 in the form of an input video bitstream.

The overlay unit 105, under the control of control unit 107, directly superimposes the coded message stored in compressed message storage unit 103 onto a video bit stream read from the receiving buffer 109 to form a new, composite video bit stream which is temporarily stored in transmission buffer 111. The bit stream stored in transmission buffer 111 is organized so that, when the contents of the buffer are read, a composite video bit stream is provided at output 123. This composite video bit stream conforms to the H.261 standard and has the same transfer rate as the input bit stream at input 121, except that the bit stream at output 123 includes an inserted overlay message that is not present in the bit stream at the input 121.

In order to overlay a coded message onto an input video bit stream, the overlay unit 105 must first locate the appropriate place in the input bit stream where the coded message is to be inserted. Once this location is found, the overlay unit 105 must then replace a portion of the input bit stream with a coded message stream. The processes of locating the appropriate place in the bit stream, and then replacing a portion of the bit stream, may be performed on a GOB-to-GOB 229 (FIG. 2) basis, and/or on a microblock-by-microblock 247 basis. On a GOB-to GOB basis, the overlay unit 105 locates the proper GOB 229 in the input video bit stream and then replaces that GOB 229 with another GOB downloaded from the compressed text storage unit 103. The GOB 229 being replaced may represent, for example, the bottom corner area of the video image stored in receiving buffer 109. This bottom corner area corresponds to GOB5 (reference numeral 237, FIG. 2) in a QCIF frame, and GOB12 (reference numeral 245) in a CIF frame. To avoid changes in the output bit rate at output 123, the coded messages are only inserted into frames that are I-coded. For P-coded frames, the coded messages are not inserted into these frames to form a P-coded frame with a message overlay. Rather, the message in its I-coded form is simply copied into the P frame. A header is added to the beginning of the compressed bit stream sent to transmission buffer 111 by overlay unit 105, and the data structure of this header specifies whether the overlay was performed on a GOB-to-GOB 229 basis, or on a microblock-by-microblock 247 basis.

Message compression is performed by message compression unit 115. As shown in FIG. 1, message compression unit 115 includes a discrete cosine transform unit (DCT Unit) 125, a quantizer 127, and a variable length encoder (VLE) 129. The DCT unit 125, quantizer 127, and VLE 129 are standardized building blocks well-known to those skilled in the art. The structure and functioning of these blocks is set forth in great detail in the above-cited H.261 standard.

At the message compression unit 115, the input video message from the message to image conversion unit 113 is first partitioned into one or more 8x8 blocks. The 8x8 blocks are then transformed by the DCT unit 125 to generate corresponding blocks of 8x8 DCT coefficients. The corresponding blocks of 8x8 DCT coefficients are quantized at quantizer 127, and the quantized DCT coefficients are sent to VLE 129. At VLE 129, the quantized DCT coefficients are coded, together with quantized information, using specified code words (pursuant to H.261). These coded, quantized DCT coefficients are then multiplexed into a layered structure such as GOBs 229 (FIG. 2), or microblocks 247, to form a message bit stream representing a compressed, coded message. Furthermore, according to the requirement of the overlay unit 105, proper header information is added to the message bit stream to form a complete coded representation of the messages. For example, if the GOB 229 level is used to define the organizational layer, a GOB header field 291 (FIG. 2) specifying a GOB number (i.e., GOB4, reference numeral 229) is added to the message bit stream. In this example, each coded message is represented in the form of a GOB bit stream. These GOB bit streams are stored in the compressed message storage unit 103.

Note that the message processing procedure described above, including the steps of message-to-image conversion and message compression, can be performed either on-line, or off-line, depending on the specific system application. In some applications, where the desired content of the message is known beforehand, then this messages can be processed off-line and stored in compressed message storage unit 103. Compressed message storage unit 103 can be employed to store a plurality of such messages. Individual messages may then be selected for overlay via an optional user interface device, such as a keypad, keyboard, personal computer, computer mouse, and/or touch-screen, coupled to control unit 107. Based upon this user input, control unit 107 selects the proper coded message and downloads this message to the overlay unit 105 for subsequent insertion. In this manner, processing delays are further reduced since the conversion of the message into image form, and the compression of this image, are performed beforehand.

The message overlay system of FIG. 1 has been experimentally verified. In practice, textual messages are more difficult to compress than other types of video signals representing, for example, a typical video conference scene. Therefore, using a given bit rate, non-textual portions of a reconstructed image may be acceptable, whereas the reconstructed text may appear somewhat blurry. A computer simulation was conducted to test the performance of the system of FIG. 1 where a textual message is to be overlaid onto a video image. A sequence of digits and letters were used as the input text. The text was converted into a subset of image blocks of 48x176 luminance pels and 24x88 Cr and Cb pels, which represents a GOB area in H.261. Text was placed into a image block of 32x160 luminance pels, and 16x80 Cb and Cr pels. The simplest and most straightforward way to represent each character or digit is by using either an 8x8 block or a 16x16 block.

FIG. 4 shows the manner in which a 16x16 image block is allocated to represent 8 digits and 3 letters, respectively. In the case of using an 8x8 block, the total number of digits or characters that can be represented is 80, and, in the case of a 16x16 block, the total number of characters that can be represented is 20. In the simulation, a 16x16 block was employed to represent digits and/or letters.

The 32x160 pels image blocks were sent to message compression unit 115 (FIG. 1). At the compression unit 115, the 32x160 image block was partitioned into 8x8 sub- blocks. Each 8x8 block was discrete cosine transformed into DCT representations in the DCT domain by DCT unit 125. The DCT coefficients were further quantized at the quantizer 127. The quantizer 127 was controlled by control unit 107 which, according to the input bit rate, generates appropriate quantization parameters for the quantizer 127. For testing purposes, a variety of different quantization parameters were used, and the quantization parameter itself was fixed for all the text blocks. The quantized DCT coefficents, together with quantization parameter, were sent to variable length encoder (VLE) 129. At the VLE 129, the quantized DCT coefficients and the quantization parameter are coded using code words specified in the H.261 standard to form an H.261-coded microblock (FIG. 2, 247) of data. The coded microblock 247, and the total number of bits used to encode the 32x160 image block, are stored in the compressed message storage unit 103. To check the picture quality of the coded text, the reconstructed texts were obtained and the signal-to-noise ratio of the reconstructed text was computed.

At the message overlay unit 105, the input bit stream obtained from the receiving buffer 109 was tested. For the first frame, which was an I coded frame, the bits representation of GOB 1 to GOB 11 were passed by the text overlay unit 105 without any modification. Message overlay unit 105 modified GOB 12 (reference numeral 245, FIG. 2) according to the following rules. For GOB 12, no changes are made to microblocks 1 to 12 of microblock field 298 (FIG. 2), and no changes are made to microblocks 13 and 23. The microblock data stored in compressed message storage unit 103 (FIG. 1) is obtained and used to replace microblocks 13 to 22 and microblocks 24 to 33 of microblock field 298 (FIG. 2). If the frame is a P-coded frame, motion vectors for microblocks 1 to 11, 12, and 23 are checked. If the motion vectors refer to the text area, which is in microblocks 13 to 22 and 24 to 33, the motion vectors are all set to zero. Microblocks 13 to 22, and 24 to 33, are then treated as skipped microblocks for P-coded frames. Proper microblock addresses are produced for the modification.

According to an additional embodiment disclosed herein, message overlay techniques are provided in the operational environment of multipoint video conferencing. Coded domain video message overlay can be applied to a wide variety of applications in visual communications. One of the most important applications includes multipoint video conferencing. In a multipoint video conference, for the sake of convenience, participants at each endpoint often would like to know some related information about the conference, such as the name of the current speaker, the location of the current speaker location, the terminal name, etc. In the environment of video conferencing, it is generally more economical to overlay the necessary messages to the outgoing video signal at a central control point, such as a multipoint control unit (MCU), as compared with providing message overlay at an endpoint device. Moreover, providing message overlay at the MCU provides enhanced flexibility as opposed to providing message overlay at an endpoint.

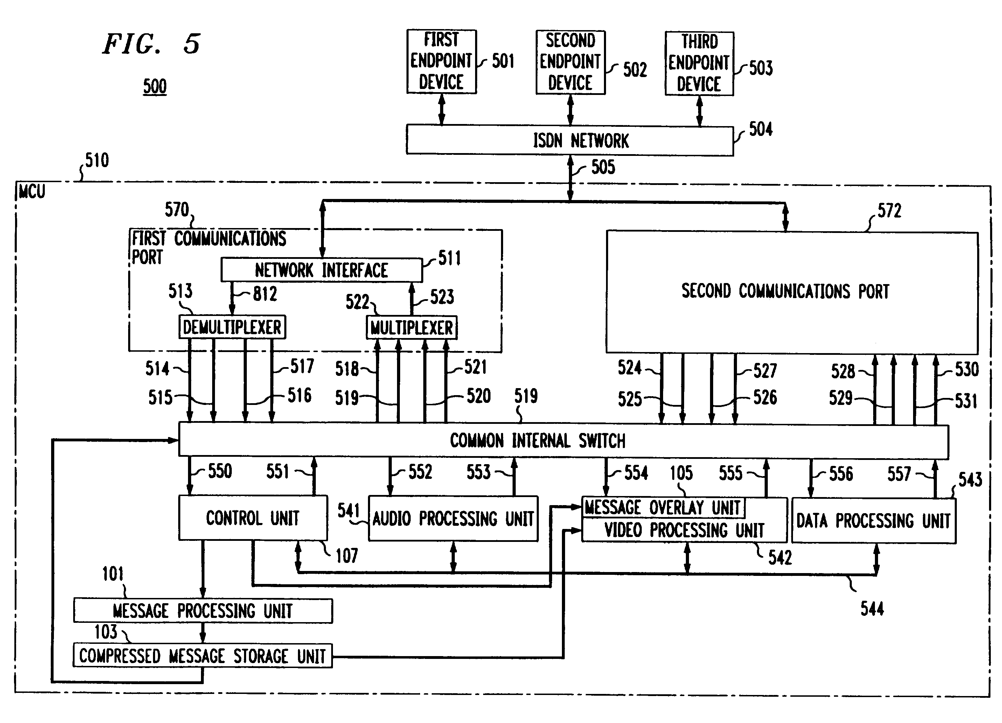

FIG. 5 is a block diagram showing a multipoint video conferencing system constructed in accordance with an embodiment disclosed herein and including an embedded message overlay unit 560 in MCU 510. As shown in FIG. 5, endpoint devices, such as first endpoint device 501, second endpoint device 502, and third endpoint device 503, are coupled to MCU 510 via ISDN network 504. These endpoint devices include one or more user interface devices as, for example, a video display, a keyboard, a microphone, a speaker, and/or a video camera. ISDN network 504 is shown for illustrative purposes, it being understood that a network other than an ISDN network, and/or another type of network in addition to an ISDN network, may be employed.

The endpoint devices (501, 502, 503) are adapted to communicate using an existing multimedia communication protocol (or protocols), such as ISDN. The endpoint device multimedia communication protocol controls the presentation of media streams (electronic signals representing audio. video. and/or data information) to the endpoint device user. Endpoint devices may function bi-directionally, both sending and receiving multimedia information, or, alternatively, endpoint devices may function unidirectionally, receiving, but not sending, multimedia information, or sending, but not receiving, multimedia information. An example of a suitable endpoint device is an ITU-T H.320 audiovisual terminal, but, in general, a device capable of terminating a digital multimedia stream and presenting it to the user is considered an endpoint device. A particular product example of an H.320 endpoint device is the AT&T GIS Vistium device offered for sale by Lucent Technologies of Murray Hill, New Jersey.

MCU 510 is a computer-controlled device which includes a multiplicity of communication ports, such as first communications port 570 and second communications port 572. These communications ports are adapted for selective interconnection in a variety of ways to provide communications among a group of endpoint devices. Each of a plurality of endpoint devices are coupled to the MCU through a corresponding communication port. MCU 501 also includes a control unit 107, an audio processing unit 541, a video processing unit 542, and a data processing unit 543. The control unit 540, audio processing unit 541, video processing unit 542, and data processing unit 543 each contain a microprocessor device. However, it is also possible for two or more of the aforementioned processing units to share a single microprocessor device.

The control unit 107 is coupled to a message processing unit 101, and the message processing unit 101 is coupled to a compressed message storage unit 103. The message processing unit 101 is controlled by a microprocessor device which may be integral to the message processing unit, and/or within message overlay unit 105, and/or within video processing unit 542, and/or within compressed message storage unit 103. The compressed message storage unit 103 includes a memory device, such as any desired combination of random-access memory (RAM), read-only memory (ROM), one or more data storage drives, or the like. Video processing unit 542 includes a message overlay unit 105. Note that the structure and functionality of message processing unit 101, compressed message storage unit 103, message overlay unit 105, and control unit 107 have been described above in connection with FIG. 1.

Each communications port 570, 572 includes a network interface 511, a demultiplexer 513, and a multiplexer 522. A common internal switch 519 is used to selectively interconnect (a) demultiplexers of communications ports (including, for example, demultiplexer 513), (b) multiplexers of communications ports (including, for example, multiplexer 522), (c) control unit 107, (d) audio processing unit 541, (e) video processing unit 542, including message overlay unit 105, and/or (f) data processing unit 543. Network interface 511 includes circuitry for implementing a conversion function between line signal coding, which is a well-known coding technique, and Px64 kbps H.221-encoded signals, which are well-known and described in the widely-available H.221 standard. The output of network interface 511 is an H.221-encoded signal which actually represents a multiplexing of several different types of information (audio, video, data, and control); therefore, network interface 511 must send the incoming MCU H.221 stream to a demultiplexer 513. Likewise, network interface 511 receives the outgoing MCU H.221 bits stream from a multiplexer 522, which combines the individual processed signals for a particular endpoint device 501.

The demultiplexer 513 separates an incoming multimedia signal stream into four components: a first component including electronic signals representing control, a second component including electronic signals representing audio, a third component including electronic signals representing video, and a fourth component including electronic signals representing data. The four outputs of demultiplexer 513 are fed to common internal switch 519.

Multiplexer 522 accepts a plurality of incoming multimedia signal component from the common internal switch, such as a first component representing control, a second component representing audio, a third component representing video, and a fourth component representing data. The multiplexer 522 integrates these four components onto a single multimedia signal stream and sends the multimedia signal stream to the network interface 511, which in turn, routes the signal stream to the proper endpoint device 502. Note that the four output signals from a demultiplexer 513 of a given communications port 570, representing control, audio, video, and data, may be inputted to respective inputs of a multiplexer 522 of another communications port 572 by common internal switch 519.

Common internal switch 519 contains a plurality of electronic switches, buffers, and amplifiers under the control of control unit 107. Common internal switch 519 is coupled to an audio processing unit 541 for mixing and switching electronic signals representing audio. Common internal switch 519 is also coupled to a video processing unit 542, to a control unit 107, and to a data processing unit 544 for mixing and switching electronic signals representing video, control, and data, respectively. The common internal switch 519 receives four outputs 514, 515, 516 517 from a given communications port 570, and routes each of these four outputs to the corresponding four inputs 528, 529, 530, 531 of another communications port 572, such that a control signal output 514 is connected to a control signal input 528, an audio signal output 515 is connected to an audio signal input 529, a video signal output 516 is connected to a video signal input 530, and a data signal output 517 is connected to a data signal input 531. The common internal switch 519 also routes four inputs 518, 519, 520 521 of a given communications port 570 to the corresponding four outputs 524, 525, 526, 527 of another communications port 572, such that a control signal output 524 is connected to a control signal input 518, an audio signal output 525 is connected to an audio signal input 519, a video signal output 526 is connected to a video signal input 520, and a data signal output 527 is connected to a data signal input 521.

Audio processing unit 541 is a unit of software and hardware for processing audio signals. The processing may take the form of switching the audio, mixing the audio, or both. In the case of audio mixing, the input signal to the processing unit is the aggregated audio signal, which consists of audio signals from all of the communications ports 570, 572. For an N-port MCU 510, this signal includes N audio signals from the demultiplexers 513 of each of N communications ports 570, 572. To mix the audio, audio processing unit 541 decodes the audio input received from common internal switch 519, adds the linear signals obtained by decoding, and then re-encodes the linear sum appropriately for each endpoint device 501, 502, 503. The summation may be limited in any of various ways: the output sum for a given endpoint device 501 may exclude that endpoint's audio input; the sum may include inputs whose present or recent past audio amplitude values exceed a certain amplitude threshold; or the sum may be controlled by one person using some method of chair-control. The output of the audio processing unit 541, in this case, is N processed audio signals. In the case where audio processing unit 541 is implemented using a simple audio switch, the input signal is a single audio signal selected based on the control signals from the control unit 107. There is no audio processing in such a case. The audio input is broadcast to all other audio processing unit 541 outputs, either automatically or under manual control.

Data processing unit 543 contains one or both of the functions generally known to those skilled in the art as "broadcast" or "MLP". For each type of broadcast data, data input is accepted from only one endpoint device 501 at any one time. Therefore, the input signal is the data output from one of the communications ports 570. The accepted data streams are broadcast to other endpoint devices 502, as determined by the control unit 107 according to the capability of the connected endpoint devices 502, 503 to receive such data.

Control unit 107 is responsible for determining the correct signal routing, mixing, switching, format and timing of the audio, video, data and control signals throughout a conference. The control unit 107 also controls mode switching on outgoing streams to accommodate combinations of audio, video, and data according to the declared capabilities of the connected endpoint devices 501, 502, 503.

The inputs to the control unit 107 are chair-control commands and commands embedded in H.221 bit streams. Commands from endpoint devices 501, 502, 503 are routed to the control unit 107 to ensure the correct distribution of the bit streams to the audio, video, and data processing units 541, 542, 543, respectively. Control unit 107 also ensures that the correct audio decoding algorithm is used at the inputs to the audio processing unit 541, and that any incoming data is sent to data processing unit 543, and/or to an MLP processor within control unit 107. The control unit 107 also directs the switching of bit streams from the audio, video, and data processing units 541, 542, 543, respectively, to each multiplexer 522, and specifies the audio encoding algorithm to be used in an audio mixer within the audio processing unit 542, and at each output from this audio mixer. The bit streams are routed to and from the various processing units 541, 542, 543 by the common internal switch 519, and this common internal switch 519 is under the control of control unit 107.

Message processing unit 101, coupled to control unit 107, accepts messages, which may be in textual format, and converts these messages into encoded bitstreams. The encoded bitstreams are stored in the designated locations in the compressed message storage unit 103. Under the control of the control unit 107, selected coded, compressed messages are downloaded from message storage unit 103 to a message overlay unit 105 within video processing unit 542.

Video processing unit 542, which includes message overlay unit 105, processes video signals received from the common internal switch 519. The processing may take the form of switching the video, matching the video, or both.

In video switching, the video processing unit 542 receives a selected video signal from the common internal switch 519, overlays the coded message obtained from the compressed message storage unit 103, and transmits the overlaid video signal to some or all other endpoint devices 502. In video matching, the video processing unit 542 receives more than one selected video signal from the common internal switch 519. These multiple video signals are composited to form a single composite video bit stream. A message from compressed message storage unit 103 can be overlaid onto the individual video signals, or this message can be overlaid onto the composite video bit stream.

Selection of the video signal that common internal switch 519 will send to a given endpoint device 503 may be automatic and/or under manual control. For instance, the audio processing unit 541 and the video processing unit 542 may be automatically controlled, such that the present speaker receives the picture of the previous speaker while all other terminals receive the picture of the present speaker. A time delay may be incorporated into the switching to avoid excessively frequent image changes caused by spurious sounds. As with the audio, video switching may also be controlled directly by a person through chair-control. If the processing delay provided the video processing unit 542 and the processing delay of the audio processing unit 541 differ by a significant amount, a compensating delay may be inserted into either the audio signal, or the video signal, to retain lip synchronization.

## Claims

1. A method for overlaying a message onto a video image in the compressed domain, comprising the following steps:
(a) representing a video image as a compressed, digitized video bit stream;
(b) generating a representation of a video message in digitized form to provide a digitized video message;
(c) compressing the digitized video message to form a coded video message; and
(d) combining the coded video message with the compressed, digitized video bit stream to generate an output video bit stream representing the video image with a message overlay including the video message.

2. The method of claim 1 wherein the video message includes representations of text, alphanumeric characters, numbers, status indicators, symbols, and/or icons.

3. Apparatus for overlaying a video message onto a video image in the compressed domain comprising:
(a) a video processing device for representing a video image as a compressed, digitized video bit stream;
(b) a message generation device for generating a representation of a video message in digitized form to provide a digitized video message;
(c) a video compression device for compressing the digitized video message to form a coded video message; and
(d) a mixing device for combining the coded video message with the compressed, digitized video bit stream to generate an output video bit stream representing the video image with a message overlay including the video message.

4. The apparatus of claim 3 wherein the video message includes representations of text, alphanumeric characters, numbers, status indicators, symbols, and/or icons.
